Europäisches Patentamt

European Patent Office

Office européen des brevets

(19)

(11) **EP 1 327 643 A1**

(12) **EUROPÄISCHE PATENTANMELDUNG**

| | |
|---|---|
| (43) Veröffentlichungstag:<br>**16.07.2003 Patentblatt 2003/29** | (51) Int Cl.[7]: **C08G 18/10**, C08G 18/48,<br>C08G 18/24, C08G 18/08,<br>C08G 18/76 |
| (21) Anmeldenummer: **02028757.9** | |
| (22) Anmeldetag: **23.12.2002** | |

(84) Benannte Vertragsstaaten:
**AT BE BG CH CY CZ DE DK EE ES FI FR GB GR
IE IT LI LU MC NL PT SE SI SK TR**
Benannte Erstreckungsstaaten:
**AL LT LV MK RO**

(30) Priorität: **09.01.2002 US 43738**

(71) Anmelder:
- **Bayer Aktiengesellschaft
  51368 Leverkusen (DE)**
- **Bayer Corporation
  Pittsburgh, PA 15205 (US)**

(72) Erfinder:
- **Bräuer, Wolfgang, Dr.
  51375 Leverkusen (DE)**
- **Heidingsfeld, Herbert
  50226 Frechen (DE)**

- **Hoppe, Hans-Georg
  42799 Leichlingen (DE)**
- **Kaufhold, Wolfgang, Dr.
  51061 Köln (DE)**
- **Schulte, Bernhard, Dr.
  47803 Krefeld (DE)**
- **Chan, Jack Cam
  Mission Viejo, VA 92691 (US)**
- **Manning, Steven Craig
  Imperial, PA 15126 (US)**
- **Nardo, Nicholas R.
  Weirton, WV 26062 (US)**

(74) Vertreter: **Klimiuk-Japadita, Meike, Dr.
Bayer Aktiengesellschaft,
Bayer Polymers,
Legal & Patents,
Patents and Licensing
51368 Leverkusen (DE)**

(54) **Verfahren zur kontinuierlichen Herstellung von thermoplastisch verarbeitbaren Polyurethanelastomeren**

(57)     Verfahren zur kontinuierlichen Herstellung von thermoplastisch verarbeitbaren Polyurethanelastomeren (TPU) unter Verwendung von 10 bis 1000 ppm, bezogen auf Polyol, Zinndioctoat als Katalysator mit einem Glaspunkt (TG) des TPU unterhalb von 50°C.

**EP 1 327 643 A1**

**Beschreibung**

Die vorliegende Erfindung betrifft ein Verfahren zur kontinuierlichen Herstellung von thermoplastisch verarbeitbaren Polyurethanelastomeren (TPU) mit aromatischen Kettenverlängerern unter Verwendung von 10 bis 1000 ppm (bezogen auf das eingesetzte Polyol) Zinndioctoat als Katalysator und mit einem Glaspunkt (TG) des TPU unterhalb von 50°C.

Thermoplastische Polyurethane (TPU) finden eine breite Anwendung, weil sie gute Elastomereigenschaften aufweisen und leicht thermoplastisch weiterverarbeitet werden können. Durch geeignete Auswahl der Komponenten lässt sich eine große Variationsbreite mechanischer Eigenschaften erzielen. Eine Übersicht über TPU, ihre Eigenschaften und Anwendungen wird z. B. in Kunststoffe 68(1978)819, in Kautschuk, Gummi, Kunststoffe 35(1982)569 und im Kunststoff-Handbuch von G. Becker, D. Braun, Bd. 7 "Polyurethane" München, Wien, Carl Hanser Verlag 1983 gegeben. Einen Überblick über die Herstellverfahren gibt Plastikverarbeiter 40 (1989).

TPU werden aus zumeist linearen Polyolen, wie Polyester- oder Polyetherpolyolen, organischen Diisocyanaten und kurzkettigen, zumeist difunktionellen Alkoholen (Kettenverlängerern) aufgebaut. Sie können diskontinuierlich oder kontinuierlich hergestellt werden.

Die Kettenverlängerer sind in der Regel kurzkettige Diole, meist aliphatische Diole wie z.B. Ethylenglykol, Butandiol und Hexandiol. Thermoplastische Polyurethane mit den seltener angewendeten aromatischen Kettenverlängerern, wie z.B. die Hydroxyalkylenether des Hydrochinons, zeichnen sich durch eine besonders hohe Wärmestandfestigkeit, sehr hohe Elastizität und einen niedrigen Druckverformungsrest aus.

In EP-A 0 308 683 ist ein weiches thermoplastisch verarbeitbares Elastomer beschrieben, das aus einem gemischten Polyester mit einem Molekulargewicht von 1800 bis 3600, einem organischen Diisocyanat und einem aromatischen Glykol-Kettenverlängerer hergestellt wird. Dieses TPU wird bevorzugt in einem Einstufenprozess in einem Reaktor bei Starttemperaturen von 110°C bis 140°C mit Zinndioctoat bzw. Zinndilaurat als Katalysatoren in einem Zeitraum von einigen Minuten hergestellt.

Dieses TPU ist besonders für die Herstellung weicher, nicht blockender Folien geeignet.

In der US 5 574 092 werden harte TPU mit einem Glaspunkt von mindestens 50°C auf Basis von speziellen aromatischen Kettenverlängerem beschrieben. Hier wird zur Herstellung ein Batch-Einstufenprozess bei einer Starttemperatur von 80°C bis 100°C unter Verwendung von 0,02 bis 2 Gew.-% Katalysatoren, z.B. von zinnorganischen Verbindungen, benutzt. Eine Reaktionszeit ist hier nicht angegeben. Das fertige TPU wird auf Bleche gegossen und abgekühlt.

Beide beschriebenen Herstellverfahren sind aufgrund ihrer langen Reaktionszeiten bzw. ihrer aufwendigen Handhabung nicht für eine wirtschaftliche TPU-Herstellung geeignet.

Das in der US 5 795 948 beschriebene kontinuierliche Herstellverfahren von TPU bei hohen Temperaturen in zwei kombinierten Reaktoren erlaubt dagegen eine wirtschaftliche Herstellung von TPU. Das in dieser Anmeldung beschriebene Verfahren beschreibt allgemein einen Mehrstufenprozess, in dem in der ersten Stufe ein Polyol mit einem Diisocyanat gemischt wird, in der zweiten Stufe in einem ersten Reaktor bei Temperaturen größer 100°C ein isocyanatterminiertes Prepolymer erzeugt wird, in einer dritten Stufe das Prepolymer mit einem Diol-Kettenverlängerer mit einem Molekulargewicht von 62 bis 500 vermischt wird und in einer vierten Stufe die Reaktion in einem zweiten Reaktor mit hoher Scherung zu Ende gebracht wird. In den Beispielen wird als Polyol Polyester und als Kettenverlängerer Butandiol verwendet. Als Reaktoren werden insbesondere Rohrmischer in Kombination mit einem Zweiwellenextruder angegeben.

Setzt man bei diesem Verfahren aber aromatische Kettenverlängerer in Kombination mit üblichen TPU-Katalysatoren, wie z.B. Ti-Katalysatoren, ein, erhält man inhomogene Produkte mit schlechten Eigenschaften. Zusätzlich kann es Probleme bei einer üblichen Schmelzefiltration geben.

In US 6 022 939 werden Polyether und eine spezielle Kombination aus Hydrochinon bis (β-hydroxyethyl)ether und Alkandiol, insbesondere auch Hexandiol als Kettenverlängerer mit organischen Diisocyanaten in Anwesenheit von Zinndilaurat als Katalysator umgesetzt.

Die Produkte werden batchweise mit einer Reaktionszeit >1 h hergestellt. Bei den Herstellbedingungen einer kontinuierlichen Herstellung erhält man dagegen aufgrund der durch den 2. Kettenverlängerer gestörten Kristallinität inhomogene, klebrige und schlecht entformbare Produkte.

Aufgabe war es, ein kontinuierliches und wirtschaftliches Verfahren zur Herstellung von thermoplastisch verarbeitbaren Polyurethanelastomeren mit hoher Wärmestandfestigkeit und sehr hoher Elastizität zur Verfügung zu stellen.

Diese Aufgabe konnte durch spezielle Kombination von Reaktionskomponenten und Reaktionsparametern gelöst werden.

Gegenstand der Erfindung ist ein Verfahren zur kontinuierlichen Herstellung von thermoplastisch verarbeitbaren Polyurethanelastomeren (TPU) bei Temperaturen von 130 bis 250°C, welches dadurch gekennzeichnet ist, dass das TPU hergestellt wird aus den Reaktionskomponenten

A) einem oder mehreren Polyetherdiolen mit im Mittel jeweils mindestens 1,8 und höchstens 3,0 zerewitinoffaktiven Wasserstoffatomen und einem zahlenmittleren Molekulargewicht Mn von 450 bis 10000,

B) einem oder mehreren organischen Diisocyanaten und

C) 1,4-Di-(β-hydroxyethyl)-hydrochinon,
unter Verwendung von Zinndioctoat als Katalysator in einer Menge von 10 bis 1000 ppm bezogen auf Polyether (A) und gegebenenfalls unter Zugabe von

D) weiteren Hilfs- oder Zusatzstoffen,

wobei das NCO/OH-Verhältnis der verwendeten Reaktionskomponenten A), B) und C) zwischen 0,85 und 1,2 liegt und der Glaspunkt (TG) des hergestellten TPU unterhalb von 50°C liegt.

Als organische Diisocyanate (B) können aliphatische, cycloaliphatische, araliphatische, aromatische und heterocyclische Diisocyanate oder beliebige Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im einzelnen seien beispielhaft genannt: aliphatische Diisocyanate wie Ethylendiisocyanat, 1,4-Tetramethylendiisocyant, 1,6-Hexamethylendiisocyanat, 1,12-Dodecandiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische; außerdem aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylenpolyisocyanate.

Zerewitinoff-aktive Polyether (A), die bei der Herstellung der erfindungsgemäßen Produkte eingesetzt werden, sind solche mit im Mittel mindestens 1,8 bis höchstens 3,0 zerewitinoff-aktiven Wasserstoffatomen und einem zahlenmittleren Molekulargewicht $\overline{M}_n$ von 450 bis 10000.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im wesentlichen linearen Polyether-Diole besitzen vorzugsweise zahlenmittlere Molekulargewichte $\overline{M}_n$ von 450 bis 6000. Sie können sowohl einzeln als auch in Form von Mischungen untereinander oder in Abmischung mit Polyesterdiolen zur Anwendung kommen. Polyesterdiole anstelle von Polyetherdiolen sind auch möglich.

Gegenüber Isocyanaten monofunktionelle Verbindungen können in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die relativen Mengen der Verbindungen (A) und (C) werden bevorzugt so gewählt, dass das Verhältnis der Summe der Isocyanatgruppen in (B) zu der Summe der zerewitinoffaktiven Wasserstoffatome in (A) und (C) 0,85:1 bis 1,2:1 beträgt, bevorzugt 0,95:1 bis 1,1:1.

Zinndioctoat wird als Katalysator in Mengen von 10 bis 1000 ppm, bevorzugt von 50 bis 300 ppm, bezogen auf Polyether (A), eingesetzt.

Die erfindungsgemäßen, thermoplastischen Polyurethanelastomere können als Hilfsund Zusatzstoffe (D) bis zu maximal 20 Gew.-%, bezogen auf die Gesamtmenge an TPU, der üblichen Hilfs- und Zusatzstoffe enthalten. Typische Hilfs- und Zusatzstoffe sind Pigmente, Farbstoffe, Flammschutzmittel, Verstärkungsmittel, Stabilisatoren gegen Alterungs- und Witterungseinflüsse (z.B. gegen Hydrolyse, Licht, Hitze und Verfärbung), Weichmacher, Antiblockmittel, Inhibitoren, Gleit- und Entformungsmittel, fungistatisch und bakteriostatisch wirkende Substanzen sowie anorganische und/oder organische Füllstoffe und deren Mischungen.

Beispiele für Gleitmittel sind Fettsäureester, deren Metallseifen, Fettsäureamide, Fettsäureesteramide und Siliconverbindungen. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU können verwendet werden.

Das erfindungsgemäße Herstellverfahren wird kontinuierlich und bei Temperaturen von 130 bis 250°C durchgeführt. Dabei werden vor Beginn der Reaktion die Rohstoffe Polyether A) und Diol C) auf 130 bis 230°C, das organische Diisocyanat auf 50 bis 150°C erhitzt. Am Ende der Reaktion werden dann aufgrund der exothermen Reaktion 180 bis 250°C erreicht.

Die erfindungsgemäßen TPU können nach dem Mischkopf/Bandverfahren oder dem sogenannten Extruderverfahren hergestellt werden. Im Extruderverfahren, z.B. in einem Mehrwellenextruder, kann die Dosierung der Komponenten A), B) und C) gleichzeitig, d.h. im one-shot-Verfahren, oder nacheinander, d.h. nach einem Prepolymer-Verfahren, erfolgen. Dabei kann das Prepolymer sowohl batchweise vorgelegt als auch kontinuierlich in einem Teil des Extruders oder in einem separaten, vorgeschalteten Prepolymeraggregat hergestellt werden. Solch ein Prepolymeraggregat kann ein gerührter Rohrreaktor oder ein oder mehrere aufeinanderfolgende Statikmischer sein.

Bevorzugt wird das TPU nach dem kontinuierlichen Prepolymerverfahren, besonders bevorzugt nach dem Prepolymerverfahren in einem Extruder bzw. in der Apparatekombination Prepolymeraggregat/Extruder hergestellt.

Die Gesamt-Reaktionszeit vom Start der Reaktion bis zur fertigen TPU-Schmelze beträgt 0,3 bis 3 Minuten, bevorzugt 0,5 bis 2 Minuten.

Bevorzugt wird die fertige TPU-Schmelze am Extruderaustritt mittels eines Filtersiebes mit einer Maschenweite von 30 bis 300 µm filtriert.

Das erfindungsgemäße TPU kann gegebenenfalls weiter bearbeitet werden, z.B. durch Temperung des Polymers in Form von Platten oder Blöcken, Zerkleinerung oder Granulierung in Schreddern oder Mühlen, Entgasung sowie Granulierung unter Aufschmelzen. Bevorzugt wird das Polymer durch ein Aggregat zur kontinuierlichen Entgasung und Strangbildung geführt. Bei diesem Aggregat kann es sich z.B. um eine Mehrwellenschneckenmaschine handeln, die möglichst mit keinen oder nur mit wenigen Knetelementen bestückt ist.

Das erfindungsgemäße kontinuierliche Herstellverfahren bei hohen Temperaturen und kurzer Verweilzeit ermöglicht eine wirtschaftliche Herstellung dieser TPU-Klasse mit ihrem besonderen Eigenschaftsprofil.

Die nach dem erfindungsgemäßen Verfahren hergestellten TPU sind sehr homogen, besitzen sehr gute mechanische und elastische Eigenschaften und zeichnen sich durch eine hohe Wärmestandfestigkeit aus. Die erfindungsgemäß hergestellten TPU lassen sich sehr gut zu Spritzgießartikeln und Extrusionsartikeln verarbeiten. Die so hergestellten Spritzplatten sind homogen und haben sehr gute mechanische Eigenschaften.

Die Erfindung soll anhand der nachfolgenden Beispiele näher erläutert werden.

**Rezeptur 1 (Beispiele 1, 3 bis 5)**

62,1 Gew.-Teile eines Polybutylenoxides (zahlenmittleres Molgewicht ca. 1000) wurden mit 0,1 Gew.-Teilen Pentaerithryltetrakis(3-(3,5-bis-1,1-dimethylethyl)-4-hydroxyphenyl)propionat und dem entsprechenden Katalysator (siehe Tabelle) auf die jeweilige Starttemperatur erwärmt und kontinuierlich in drei hintereinandergeschaltete SMX-Statikmischer der Firma Sulzer (DN 50) dosiert. Gleichzeitig pumpte man kontinuierlich 28,4 Gew.-Teile 4,4'-Diphenylmethandiisocyanat (60°C) in die Statikmischer.

Das entstandene Prepolymer wurde in das Gehäuse 1 eines Extruders (ZSK 120 der Fa. Werner & Pfleiderer) dosiert. In Gehäuse 3 wurden 9,4 Gew.-Teile 1,4-Di-(β-hydroxyethyl)-hydrochinon kontinuierlich gegeben. Die Drehzahl des Extruders betrug 240 U/min.

Am Ende der ZSK wurde die Schmelze durch ein Einlagen-Metallsieb mit einer Maschenweite von 200 μm filtriert, als Strang abgezogen, im Wasserbad gekühlt und granuliert.

**Rezeptur 2 (Beispiel 2)**

Die einzelnen Dosierströme wurden wie folgt in eine ZSK 120 der Fa. Werner & Pfleiderer eingespeist:

A) Mischung (A) in das Gehäuse 1 der ZSK:

| | |
|---|---|
| 61,9 Gew.-Teile | Polybutylenoxid (zahlenmittleres Molgewicht ca. 1000) |
| 0,1 Gew.-Teile | Pentaerithryltetrakis(3-(3,5-bis-1,1-dimethylethyl)-4-hydroxyphenyl)propionat |
| 0,2 Gew.-Teile | Hexandiol |
| | Katalysator (siehe Tabelle) |

B) in das Gehäuse 1 der ZSK

9,4 Gew.-Teile     1,4-Di-(β-hydroxyethyl)hydrochinon

C) in das Gehäuse 3 der ZSK

28,4 Gew.-Teile     4,4'-Diphenylmethandiisocyanat

**Rezeptur 3 (Beispiele 6 und 7)**

Analog dem Herstellverfahren für die Rezeptur 1 wurden folgende Rohstoffe eingesetzt :

| | |
|---|---|
| 42,1 Gew.-Teile | eines Polybutylenoxides (zahlenmittleres Molgewicht ca. 1000), |
| 0,1 Gew.-Teile | Pentaerithryltetrakis(3-(3,5-bis-1,1-dimethylethyl)-4-hydroxy-phenyl)propionat, |
| | Katalysator (siehe Tabelle) |
| 37,5 Gew.-Teile | 4,4'-Diphenylmethandiisocyanat, |
| 20,3 Gew.-Teile | 1,4-Di-(β-hydroxyethyl)-hydrochinon. |

Die Spritzplatten wurden aus den Granulaten in einer Spritzgießmaschine (Schneckendurchmesser 28 cm) der Firma Klöckner hergestellt. Die Härteprüfung erfolgte an den Platten gemäß DIN 53505, die Zugprüfung gemäß DIN 53504.

In den folgenden Tabellen sind die Ergebnisse der Beispiele zusammengefasst. Entscheidender Vorteil bei Anwendung des erfindungsgemäßen Verfahrens sind ein homogeneres Produkt und die deutlich verlängerten Siebstandzeiten.

Bei der kontinuierlichen Herstellung von TPU können Inhomogenitäten z.B. durch ein Schmelze-Sieb (z.B. am Austritt des Extruders) abfiltriert werden. Der Druck vor dem Schmelze-Sieb steigt mit der Zeit an. Sobald der maximal zulässige Druck erreicht ist, wird das Sieb gewechselt (Siebstandzeit). Durch das erfindungsgemäße Verfahren werden erheblich weniger Inhomogenitäten gebildet, so dass die Siebstandzeiten erheblich länger sind als bei der Durchführung der bekannten Verfahren.

Die nach dem erfindungsgemäßen Verfahren hergestellten Produkte sind sehr homogen und weisen verbesserte mechanische Werte (Reißfestigkeit/Dehnung) gegenüber Produkten auf, die nach bekannten Verfahren hergestellt werden.

Tabelle 1:

| Verfahrensbedingungen, Sieb-Standzeiten und hergestellte Spritzplatten | | | | | | |
|---|---|---|---|---|---|---|
| Bsp. | Rezeptur | Katalysator | Start-Temp. Polyol | ZSK-Temp. | Sieb-Standzeit | Spritzplatte |
| 1* | 1 | 10 ppm TiAcAc | 180°C | 180-220°C | 0,3 h | Stark inhomogen |
| 2* | 2 | 10 ppm TiAcAc | 195°C | 180°C | 0,3 h | inhomogen |
| 3 | 1 | 110 ppm Sndioctoat | 215°C | 200-240°C | 2 h | homogen |

Tabelle 1: (fortgesetzt)

| Verfahrensbedingungen, Sieb-Standzeiten und hergestellte Spritzplatten | | | | | | |
|---|---|---|---|---|---|---|
| Bsp. | Rezeptur | Katalysator | Start-Temp. Polyol | ZSK-Temp. | Sieb-Standzeit | Spritzplatte |
| 4 | 1 | 110 ppm Sndioctoat | 154°C | 180-210°C | 2 h | homogen |
| 5 | 1 | 110 ppm Sndioctoat | 138°C | 150-200°C | 4 h | homogen |
| 6* | 3 | 10 ppm TiAcAc | 180°C | 160-180°C | 0,3 h | inhomogen inhomogen |
| 7 | 3 | 110 ppm Sndioctoat | 160°C | 160-180°C | 2 h | homogen |

* nicht erfindungsgemäße Vergleichsbeispiele
Sndioctoat - Zinndioctoat
TiAcAc - Titanylacetylacetonat

Tabelle 2:

| Eigenschaften der hergestellten Produkte | | | | | | | | |
|---|---|---|---|---|---|---|---|---|
| Bsp | Rezeptur | Glaspunkt (TG) in [°C] | Katalysator | Härte Shore | Abzugsgeschw. Zugversuc h [mm/min] | 100%-Modul [MPa] | Reißfestigkeit [MPa] | Reißdehnung [%] |
| 1* | 1 | -46 | 10 ppm TiAcAc | 84 A | 50 | 6,4 | 38 | 400 |
| 2* | 2 | -45 | 10 ppm TiAcAc | 87 A | 50 | 6,9 | 34 | 400 |
| 3 | 1 | -46 | 110 ppm Sndioctoat | 87 A | 50 | 6,8 | 47 | 438 |
| 4 | 1 | -46 | 110 ppm Sndioctoat | 88 A | 50 | 6,8 | 51 | 458 |
| 5 | 1 | -46 | 110 ppm Sndioctoat | 86 A | 50 | 6,6 | 51 | 480 |
| 6* | 3 | -19 | 10 ppm TiAcAc | 63 D | 500 | 23 | 36 | 347 |
| 7 | 3 | -19 | 110 ppm Sndioctoat | 60 D | 500 | 27 | 39 | 393 |

**Patentansprüche**

1.  Verfahren zur kontinuierlichen Herstellung von thermoplastisch verarbeitbaren Polyurethanelastomeren (TPU) bei Temperaturen von 130 bis 250°C, **dadurch gekennzeichnet, dass** das TPU hergestellt wird aus den Reaktionskomponenten

    A) einem oder mehreren Polyetherdiolen mit im Mittel jeweils mindestens 1,8 und höchstens 3,0 zerewitinoff-aktiven Wasserstoffatomen und jeweils einem zahlenmittleren Molekulargewicht Mn von 450 bis 10000,

    B) einem oder mehreren organischen Diisocyanaten und

    C) 1,4-Di-(β-hydroxyethyl)-hydrochinon
    unter Verwendung von Zinndioctoat als Katalysator in einer Menge von 10 bis 1000 ppm bezogen auf Polyol A) und gegebenenfalls unter Zusatz

    D) weiterer Hilfs- oder Zusatzstoffe ,

    wobei das NCO/OH-Verhältnis der verwendeten Reaktionskomponenten A), B) und C) zwischen 0,85 und 1,2 liegt und der Glaspunkt (TG) des hergestellten TPU unterhalb von 50°C liegt.

2.  Verfahren zur Herstellung von thermoplastisch verarbeitbaren Polyurethanelastomeren gemäß Anspruch 1, **dadurch gekennzeichnet, dass** die Herstellung in einem Extruder erfolgt.

3.  Verfahren zur Herstellung von thermoplastisch verarbeitbaren Polyurethanelastomeren gemäß Anspruch 1 oder 2, **dadurch gekennzeichnet, dass** die Herstellung in einem Prepolymerverfahren erfolgt.

4.  Verwendung der nach einem oder mehreren der Ansprüche 1 bis 3 hergestellten Polyurethanelastomere zur Herstellung von Spritzgießartikeln und Extrusionsartikeln.

# EP 1 327 643 A1

**Europäisches Patentamt**

## EUROPÄISCHER RECHERCHENBERICHT

**Nummer der Anmeldung**

EP 02 02 8757

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 959 059 A (GOSCEWSKI STANLEY RAYMOND ET AL) 28. September 1999 (1999-09-28) * Beispiele 14-20; Tabellen I,II * * Spalte 2, Zeile 43-46,55-60 * * Spalte 2, Zeile 65 - Spalte 3, Zeile 1 * * Spalte 4, Zeile 55-57 * --- | 1-4 | C08G18/10 C08G18/48 C08G18/24 C08G18/08 C08G18/76 |
| X | WO 99 14252 A (FOSS ROBERT P ;OPTIMER INC (US)) 25. März 1999 (1999-03-25) * Beispiel 14 * --- | 1-4 | |
| X | DE 25 32 040 A (UPJOHN CO) 19. Februar 1976 (1976-02-19) * Ansprüche 1,2; Beispiel 1 * * Seite 9, Zeile 4-25 * * Seite 10, Zeile 26 - Seite 11, Zeile 22 * --- | 1-4 | |
| X | DE 20 59 570 A (UPJOHN CO) 9. Juni 1971 (1971-06-09) * Seite 7, Zeile 1-17; Beispiel 2 * ----- | 1-4 | **RECHERCHIERTE SACHGEBIETE (Int.Cl.7)** C08G |

Der vorliegende Recherchenbericht wurde für alle Patentansprüche erstellt

| Recherchenort | Abschlußdatum der Recherche | Prüfer |
|---|---|---|
| MÜNCHEN | 10. Februar 2003 | Lanz, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

9

**ANHANG ZUM EUROPÄISCHEN RECHERCHENBERICHT
ÜBER DIE EUROPÄISCHE PATENTANMELDUNG NR.**  EP 02 02 8757

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-02-2003

| Im Recherchenbericht angeführtes Patentdokument | Datum der Veröffentlichung | Mitglied(er) der Patentfamilie | Datum der Veröffentlichung |
|---|---|---|---|
| US 5959059 A | 28-09-1999 | AU 7810898 A | 30-12-1998 |
| | | CN 1259150 T | 05-07-2000 |
| | | DE 69807872 D1 | 17-10-2002 |
| | | EP 0988334 A1 | 29-03-2000 |
| | | JP 2002503284 T | 29-01-2002 |
| | | WO 9856845 A1 | 17-12-1998 |
| WO 9914252 A | 25-03-1999 | US 5840233 A | 24-11-1998 |
| | | AU 9480198 A | 05-04-1999 |
| | | EP 1021474 A1 | 26-07-2000 |
| | | US 6277942 B1 | 21-08-2001 |
| | | WO 9914252 A1 | 25-03-1999 |
| | | US 2002010303 A1 | 24-01-2002 |
| DE 2532040 A | 19-02-1976 | US 3901852 A | 26-08-1975 |
| | | CA 1067246 A1 | 27-11-1979 |
| | | DE 2532040 A1 | 19-02-1976 |
| | | ES 439772 A1 | 16-03-1977 |
| | | FR 2280663 A1 | 27-02-1976 |
| | | GB 1464505 A | 16-02-1977 |
| | | IT 1041023 B | 10-01-1980 |
| | | JP 976766 C | 30-10-1979 |
| | | JP 51037192 A | 29-03-1976 |
| | | JP 54010034 B | 01-05-1979 |
| | | NL 7508970 A ,C | 02-02-1976 |
| DE 2059570 A | 09-06-1971 | BE 759829 A1 | 03-06-1971 |
| | | CA 928445 A1 | 12-06-1973 |
| | | DE 2059570 A1 | 09-06-1971 |
| | | FR 2072814 A5 | 24-09-1971 |
| | | GB 1319305 A | 06-06-1973 |
| | | US 3642964 A | 15-02-1972 |
| | | ZA 7007810 A | 29-09-1971 |

Für nähere Einzelheiten zu diesem Anhang : siehe Amtsblatt des Europäischen Patentamts, Nr.12/82